# EUROPEAN PATENT SPECIFICATION

(11) **EP 4 253 497 B1**
(45) Date of publication and mention of the grant of the patent: **01.10.2025**
(21) Application number: 21897123.2
(22) Date of filing: 26.11.2021
(51) Int. Cl.: C09J 175/04, C09J 11/06, C09J 11/04, C08G 18/48, C08G 18/10, C08G 18/12, C08G 18/18, C08G 18/76, C08K 3/04, C09J 5/00, C09J 175/08

(54) **POLYURETHANE COMPOSITION HAVING REDUCED FOAMING AND MATTE EFFECT**
POLYURETHANZUSAMMENSETZUNG MIT VERMINDERTER SCHAUMBILDUNG UND MATTWIRKUNG
COMPOSITION DE POLYURÉTHANE PRÉSENTANT UN MOUSSAGE RÉDUIT ET UN EFFET MAT

(30) Priority: 26.11.2020 CN 202011344347
(43) Date of publication of application: 04.10.2023
(73) Proprietor: Sika Technology AG, 6340 Baar (CH)
(72) Inventor: HUANG, Ping, Suzhou, Jiangsu 215121 (CN); ZHANG, Xiaoyan, Suzhou, Jiangsu 215121 (CN)
(74) Representative: Sika Patent Attorneys
(86) International application number: PCT/CN2021/133444
(87) International publication number: WO 2022/111623

(56) References cited:
- EP-A1- 0 764 670
- CN-A- 1 392 171
- CN-A- 1 507 479
- CN-A- 101 580 699
- CN-A- 101 818 039
- CN-A- 106 232 668
- CN-A- 106 634 782
- CN-A- 106 753 181
- CN-A- 107 142 068
- CN-A- 108 148 537
- CN-A- 108 239 516
- CN-A- 108 368 222
- CN-A- 109 735 286
- CN-A- 109 777 338
- CN-A- 110 387 187
- CN-A- 110 922 930
- CN-A- 111 748 310
- CN-A- 112 375 530
- US-A- 5 698 656
- US-A- 5 922 809
- US-A1- 2005 054 764

## Description

### Technical Field

The invention relates to the field of polyurethane adhesives and sealants, particularly to a low-TVOC weatherable polyurethane composition that has reduced blistering upon curing and good matte effects. The invention is set out in the appended set of claims.

### Background

For coatings, adhesives and sealants for construction and industrial manufactures, a low emission of total volatile substance (i.e. a low TVOC) is required more and more strictly. Hence, in coating, adhesive and sealant compositions, avoiding the use of volatile organic solvents as far as possible becomes a tendency and it also satisfies requirements of users on environmental friendliness.

Curable polyurethane compositions which crosslink through reaction of isocyanate groups with hydroxyl groups and/or moisture or water are used in many industrial applications, for example as adhesives, sealants or coatings in the construction and manufacturing industries. When compositions of this kind are used at high humidity and/or elevated temperature, the curing thereof often gives rise to disruptive blisters as a result of carbon dioxide gas released, which is not dissolved or dissipated quickly enough. In order to avoid blisters, it is possible to add chemically blocked amines to the compositions, called latent curing agents, which release amino groups on contact with moisture and are crosslinked rapidly with the isocyanate groups without formation of carbon dioxide. Latent curing agents used are usually compounds having aldimine, ketimine or oxazolidine groups. However, the known latent curing agents may be disadvantageous. For instance, they can trigger premature crosslinking reactions and hence lower the storage stability of the compositions and/or accelerate the curing thereof to such a degree as to result in too short an open time and hence too short a working window. Moreover, many of the known latent curing agents, on curing, lead to troublesome emissions caused by highly volatile, intensely odorous, aldehydes or ketones which serve as blocking agents in the latent curing agent and are released through hydrolysis.

Furthermore, in some special fields, the coating, adhesive or sealant compositions are further required to have matte effects, because matte surfaces can reduce the chance for vision interferences so that blemishes and defects are less evident than those on glossy surfaces. At present, gloss may be significantly decreased by adding fillers having matte effects such as ultrafine silica or talc powder, thereby increasing the matte effects. The grain size of the fillers will produce great impacts on the gloss, and the larger the grain size, the lower the gloss becomes. However, increasing the amount of the fillers, in turn, will cause the evenness and mechanical strength of products to decrease.

CN105733491A discloses a low-TVOC weatherable polyurethane sealant. The polyurethane prepolymer contained in the polyurethane sealant is prepared by reacting a polyether polyol and an isocyanate. Suitable isocyanates include numerous aliphatic or aromatic polyisocyanates such as toluene diisocyanate, hexamethylene diisocyanate, or dicyclohexylmethane diisocyanate. Particularly, this reference points out that the weatherability of sealants prepared with aromatic isocyanates is far inferior to those of sealants prepared with aliphatic isocyanates. This reference neither pays attention to how to reduce blisters upon curing nor mentions the matte effects.

Further, CN1507479A proposes a highly weatherable moisture-curable one-component polyurethane composition. In this composition, in order to provide a sufficient curability to the composition and to exclude blister problems upon curing, blocked amine compound additives, e.g., polyimides, are added.

CN106753181A as an additional example discloses a polyurethane sealant for automobile interior, comprising, among other ingredients, a polyurethane prepolymer and between 5 and 50 wt% of carbon black. In exemplary embodiments, the polyurethane prepolymer is prepared from a mixture of polyether diols and triols and MDI.

### Summary of the Invention

It is therefore one object of the invention to provide a polyurethane composition, which, upon curing, can reduce blistering and bring matte effects. Furthermore, the composition can further reduce the emission of TVOC and have excellent weatherability and processability whilst maintaining or improving mechanical performances. Particularly, where blocked amine compounds, e.g., polyimides, are substantially not contained, the polyurethane composition according to the invention may also achieve reduced blistering at a high temperature and a high humidity upon curing in a simple manner.

It has been found that, surprisingly, this object is achieved by a polyurethane composition as described in claim 1.

In the polyurethane composition according to the invention, the polyurethane prepolymers are reaction products obtained by reacting a polyether polyol component comprising polyether diols and polyether triols in a specific ratio and at least two different aromatic isocyanates, or a mixture of the reaction products formed by reacting polyether triol and/or diol with one of two different aromatic polyisocyanates respectively. Compositions comprising such polyurethane prepolymers can particularly assure an excellent weatherability.

Meanwhile, the inventors further found that using a certain amount of carbon black in the composition can further reduce blistering upon curing and help to increase the weatherability and achieve matte effects, without the evenness and mechanical strength of products being compromised. It is surprising that this is achieved in the case where latent curing agents of blocked amine compounds are not used.

Additionally, solvents may be not used in the polyurethane composition of the invention, thereby reducing the total VOC content.

Further aspects of the invention are the subject of other independent claims. Particularly preferred embodiments of the invention are the subject of the dependent claims.

### Detailed description of the invention

The subject matter of the invention is a polyurethane composition, based on the total weight of the composition, comprising
A) from 20 to 50 wt%, preferably from 25 to 40 wt% of at least one isocyanate-terminated polyurethane prepolymer PU which is a reaction product of polyether polyols with at least two different aromatic polyisocyanates or a mixture of the reaction products formed by reacting polyether triol and/or diol with one of two different aromatic polyisocyanates respectively, wherein the polyether polyols comprise polyether diols and polyether triols with a weight ratio of polyether triols to polyether diols in a range of 4:1 to 13:1; and
B) from 12.5 to 17.5 wt%, preferably from 13 to 16.5 wt% of carbon black.

In this document, substance names beginning with "poly," such as polyol or polyisocyanate, include substances that formally contain two or more of the functional groups per molecule that occur in their name. In this document, the term "polymer" comprises, on the one hand, a collective of macromolecules that are chemically uniform but different relative to the degree of polymerization, molecular weight, and chain length, and said collective was produced by a polyreaction (polymerization, polyaddition, or polycondensation). The term also comprises derivatives of such a collective of macromolecules from polyreactions, i.e., compounds that were obtained by reactions, such as, for example, additions or substitutions, of functional groups on specified macromolecules, and that can be chemically uniform or chemically non-uniform. In addition, the term also comprises so-called prepolymers, i.e., reactive oligomeric prepolymers whose functional groups are involved in the creation of macromolecules.

Isocyanate-terminated polymers are polymers or prepolymers having at least one terminal isocyanate group, particularly having two terminal isocyanate groups.

Here, the term "prepolymer" typically refers to oligomers or prepolymers of intermediate products for productions of polymers having higher molecular weights.

"Molecular weight" refers to the molar mass (in g/mol) of a molecule or a molecule residue. "Average molecular weight" refers to the number-average molecular weight (Mn) of a polydisperse mixture of oligomeric or polymeric molecules or molecule residues. It is typically determined by means of gel permeation chromatography (GPC) against polystyrene as standard. "Room temperature" refers to a temperature of 23 °C.

The term "polyurethane polymer/prepolymer" comprises all polymers that are produced according to the so-called diisocyanate-polyaddition method. Examples of polyurethane polymers/prepolymers are polyether polyurethanes, polyester polyurethanes, polyisocyanurates and polycarbodiimides.

The polyurethane prepolymers PU according to the invention are the reaction products of polyether polyols with at least two different aromatic isocyanates, or mixtures of the reaction products formed by reacting polyether triol and/or diol with one of two different aromatic polyisocyanates respectively, wherein the polyether polyols comprise polyether diols and polyether triols with a weight ratio of polyether triols to polyether diols in a range of 4:1 to 13:1, preferably in a range of 5:1 or 5.1:1 to 12:1. In the invention, a higher amount of the polyether diols may cause the mechanical performances of the products to decrease, and the heat resistance and the UV crack resistance also can be influenced. If the amount of the polyether triols is too high, it will result in insufficient toughness and deteriorated chalking resistance.

Suitable polyurethane polymers PU for preparing the composition according to the invention are polymers or polymer mixtures available from the reaction of the polyether polyols with at least two different aromatic polyisocyanates (preferably diisocyanate). This reaction may be conducted as follow: the polyols and the polyisocyanates are brought to reaction with common methods, for example at temperatures of 50 °C to 100 °C, optionally with the use of suitable catalysts, wherein the polyisocyanates can be metered in such a way that the isocyanate groups are present in stoichiometric excess relative to the hydroxyl groups of the polyols.

Particularly, excessive aromatic isocyanates are selected so that based on the overall polymer, 0.1 to 5 wt%, preferably 0.2 to 3 wt%, and particularly preferably 0.3 to 2.5 wt% of free isocyanate groups remain in the polyurethane polymer obtained after all hydroxyl groups of the polyether polyols are reacted.

Optionally, the polyurethane prepolymers PU may be produced with the use of plasticizers, wherein the used plasticizers do not contain any groups that are reactive to isocyanate groups.

Preferably, polyurethane prepolymers comprising the specified amount of free isocyanate groups are available from the reaction of all isocyanates and all polyether diols in a NCO:OH ratio of 1.3:1 to 4:1, particularly 1.5:1 to 3:1 and particularly preferably 1.7:1 to 2.5:1. Advantageously, the polyurethane prepolymers PU have a content of residual free NCO of 1.0 to 2.5 wt%.

Polyether polyols for preparation of the polyurethane prepolymers PU of the invention comprise polyether diols and polyether triols, particularly consist of polyether diols and polyether triols.

Particularly suitable are polyether polyols, also called polyoxyalkylene polyols or oligoetherols, which are polymerization productions of ethylene oxide, 1,2-propylene oxide, 1,2- or 2,3-butylene oxide, oxetane, tetrahydrofuran or mixtures thereof, optionally polymerized using a starter molecule with two or more active hydrogen atoms, such as, for example, water, ammonia, or compounds with several OH or NH groups, such as, for example, 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, as well as mixtures of the above-mentioned compounds. Both polyoxyalkylene polyols, which have a low degree of unsaturation (measured according to ASTM D-2849-69 and indicated in milliequivalents of unsaturation per gram of polyol (mEq/g)), produced, for example, using so-called double metal cyanide complex catalysts (DMC Catalysts), and polyoxyalkylene polyols with a higher degree of unsaturation, produced, for example, using anionic catalysts, such as NaOH, KOH, CsOH or alkali alcoholates, can be used.

Ethylene-oxide-terminated ("EO-end capped", ethylene oxide-endcapped) polyoxypropylene polyols are also suitable. The latter are particularly polyoxypropylene polyoxyethylene polyols, which are obtained, for example, as follows: pure polyoxypropylene polyols, particularly polyoxypropylene diols and -triols, are further alkoxylated after polypropoxylation reaction with ethylene oxide and as a result have primary hydroxyl groups. In this case, preferences are given to polyoxypropylene polyoxyethylene polyols and polyoxypropylene polyoxyethylene triols.

In a preferred embodiment, the polyether diols and the polyether triols are selected from polyoxyethylene diols or triols, polyoxypropylene diols or triols, and polyoxypropylene-polyoxyethylene diols or triols, particularly polyoxyethylene diols, polyoxypropylene diol, polyoxyethylene triol and polyoxypropylene triol.

The polyols preferably have an average molecular weight of 250 to 30000 g/mol, particularly, 1000 to 20000 g/mol, and an average OH-functionality in a range of 1.6 to 3. Particularly, the molecular weight of the polyether diol ranges from 3000 to 5000 g/mol while the molecular weight of the polyether triol ranges from 4000 to 6000 g/mol.

The composition of the invention may further optionally comprise the polyurethane prepolymers, especially the terminal isocyanate group containing polyurethane prepolymers, obtained by reacting a small amount, for example less than 2% or 1.5% or 1%, based on the total weight of the composition, of some other polyols (such as 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, hydrogenated bisphenol A, dimer fatty alcohols, 1,1,1-trimethylolethane, 1,1,1-trimethylolpropane, glycerol, pentaerythritol, sugar alcohols, such as xylitol, sorbitol or mannitol, sugars such as saccharose, other higher alcohols, low-molecular alkoxylated products of said diols and polyols, polyester polyol as well as mixtures of the above-mentioned alcohols) with isocyanates, e.g., the polyisocyanates as described herein. In some advantageous embodiments of the invention, it is also possible to use only the above-mentioned polyether diols and -triols as the polyol component reacting with the polyisocyanates, and that is, only the polyurethane prepolymer PU as described herein may be contained in the composition as the polyurethane prepolymer therein.

In the polyurethane prepolymers PU according to the invention, it is necessary to use at least two different aromatic polyisocyanates. In contrast to some teachings in the prior art, the inventors have found that it is essential to use at least two aromatic polyisocyanates in the polyurethane composition of the invention. In the scope of the invention, for example, the mixtures of the prepolymers or reaction products may be used which are obtained by reacting two or more different aromatic isocyanates with corresponding polyether polyols respectively, or the reaction products may be used which are obtained by reacting two or more different aromatic polyisocyanate with corresponding polyether polyols simultaneously. In comparison to the aromatic isocyanates, the aliphatic polyisocyanates or prepolymers thereof commonly used in the prior art typically have a slow reaction rate and thus cannot form a crosslinking timely, and they are inclined to crack during the later aging. In addition, the aliphatic polyisocyanates or prepolymers thereof may possibly result in the increases of the TVOC of products. Moreover, in view of the weatherability of products, the inventors have found that it can possibly leads to the products having better weatherability if using two or more aromatic polyisocyanates in the polyurethane prepolymers PU of the invention, rather than using one single aromatic polyisocyanate.

Preferably, suitable aromatic polyisocyanates are diisocyanates, preferably selected from the group consisting of m- and p-xylylene diisocyanate (m- and p-XDI), m- and p-tetramethyl-1,3-xylylene diisocyanate, m- and p-tetramethyl-1,4-xylylene diisocyanate, bis-(1-isocyanato-1-methylethyl)-naphthalene, 2,4- and 2,6-toluoylene diisocyanate (TDI), 4,4'-, 2,4'- and 2,2'-diphenylmethane-diisocyanate (MDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatodiphenyl (TODI), and mixtures and oligomers thereof; particularly preferably, selected from combinations of 4,4'-, 2,4'- and 2,2'-diphenylmethane-diisocyanate (MDI) and 2,4- and 2,6-toluoylene diisocyanate (TDI).

In principle, the polyurethane prepolymers PU of the invention may be prepared in any reaction product forms. For example, the polyurethane prepolymers PU may be reaction products obtained by adding together polyether triols, polyether diols and two aromatic polyisocyanates, e.g., MDI and TDI, to conduct a reaction. They can be also obtained by reacting the polyether triols and/or diols with one of the two aromatic polyisocyanate respectively, and then mixing the formed reaction products. In a particularly preferred embodiment, the polyurethane prepolymers PU are mixtures of the reaction products of the above-mentioned polyether triols with MDI and the reaction products of the polyether triols and polyether diols with TDI.

In the polyurethane composition according to the invention, the polyurethane prepolymers PU are present in an amount of 20 to 50 wt%, preferably 25 to 40 wt%, based on the total weight of the composition. If the amount of the polyurethane prepolymers is too low, it may impair the storage stability of the product; moreover, a too high amount possibly impairs the weatherability of the product.

Further, the polyurethane composition of the invention particularly has to comprise carbon black in an amount of 12.5 to 17.5 wt%, preferably 13 to 16.5 wt%, based on the total weight of the composition.

Suitable carbon black for the invention is a product that is commonly used in industry, loose and very fine black powders having a large specific surface. Typically, the carbon black is a product available from incomplete combustion or thermal decomposition of carbonaceous substances e.g., coals and natural gas, at the condition of insufficient air, and it may be commercially available as, e.g., Cabot M570.

The inventors have found that adding the above specified amount of the carbon black to the composition system according to the invention can unexpectedly achieve reduced blistering upon curing, particularly without the need of a latent curing agent of blocked amine compounds. Hence, advantageously, the composition of the invention may comprise, based on the total weight of the composition, less than 1 wt%, preferably less than 0.5 wt%, more preferably less than 0.1 wt% and particularly preferably 0 wt% of a latent curing agent of blocked amine compounds, e.g., polyaldimines. The blocked amine compounds are blocked amine compounds that are substantially not reactive with isocyanate groups, but reactive with moisture to form primary amino groups or secondary amino groups. Such blocked amine compounds include aldimines, ketimines, enamines, oxazolidines, and other condensates of an aldehyde or ketone with a compound having at least one primary or secondary amino group and also having an active hydrogen, such as primary or secondary amino and hydroxyl groups. Furthermore, compounds having two or more oxazolidine groups in the molecule prepared by reacting N-hydroxyoxazolidine with an organic polyisocyanate, may be used. Meanwhile, the inclusion of a specific amount of carbon black in the polyurethane composition according to the invention may further help to achieve matte effects without impairing the mechanical strength of the product. However, in order to achieve these effects, the above-required amount of carbon black is essential. If the amount of the carbon black is too low, it can possibly cause the product to blister, while a too high amount may impair processibility, for example, leading to a too high extrusion force.

The composition preferably comprises further constituents that are common for polyurethane adhesives, particularly, fillers other than carbon black, plasticizers, rheology additives, adhesion promoters, desiccants or stabilizers against UV radiation and oxidation, and other common admixtures.

The other fillers include one of calcium carbonate, titanium oxide, clay, talc, zinc oxide, glass beads, kaolin, silica powder, mica powder, polyamides, and PVC paste or a mixture of two or more of the above.

The polyurethane composition of the invention may advantageously comprise in total 10 to 70 wt%, preferably 20 to 60 wt%, more preferably 35 to 55 wt% of fillers including carbon black, based on the total weight of the composition.

Particularly, compositions may comprise at least one plasticizer. Particularly, suitable plasticizers are esters of organic carboxylic acids, particularly phthalate esters such as diisononyl phthalate or diisodecyl phthalate, hydrogenated phthalate esters such as diisononyl-1,2-cyclohexane-dicarboxylate, adipate esters such as dioctyl adipate, azelainate esters or sebacate esters, or esters of organic phosphoric acids and sulfonic acids, or hydrocarbons such as polybutene or polyisobutene. Preferred plasticizers are phthalate esters, hydrogenated phthalate esters or adipate esters. Most preferences are given to diisononyl phthalate, diisodecyl phthalate, or diisononyl-1,2-cyclohexane-dicarboxylate.

Based on the whole composition, the amount of the plasticizers in the composition is preferably in a range from 5 to 40 wt%, particularly from 10 to 30 wt%, and particularly preferably from 15 to 25 wt%.

Suitable adhesion promoters, particularly silane adhesion promoters, are organoalkoxysilanes ("silanes") bearing one reactive group on the organic group, particularly epoxysilanes, mercaptosilanes, (meth)acryloylsilanes, isocyanatosilanes, anhydridosilanes, S-(alkylcarbonyl)-mercaptosilanes, aldiminosilanes or oligomeric forms of these silanes, or adducts of aminosilanes or mercaptosilanes and polyisocyanates. Preferences are given to 3-glycidyloxypropyl trimethoxysilane, β-(3,4-epoxycyclohexyl)-ethyl trimethoxysilane, 3-mercaptopropyl trimethoxysilane or 3-methylacryloxypropyl trimethoxysilane. Most preference is given to 3-glycidyloxypropyl trimethoxysilane, for example, commercially available as Silquest^{®} A-187.

Based on the whole composition, the amount of the silane adhesion promoters in the composition is preferably in a range from 0.01 to 1.0 wt%, particularly from 0.05 to 0.5 wt%.

The composition according to the invention may further comprise at least one amine catalyst. Suitable amine catalysts are tertiary amines, particularly those having low pKa values, preferably pKa values between 12 and 7. Suitable amine catalysts, for example, are N-ethyl-diisopropylamines, N,N,N',N'-tetramethyl alkylenediamines, 1,4-diazabicyclo[2.2.2]octane or triethylene diamine, and preferences are given to 2,2'-dimorpholinodiethyl ether (DMDEE) and its derivatives having substituents on the morpholinyl ring. Particular preferences are given to DMDEE and triethylene diamine.

Based on the whole composition, the amount of the amine catalysts in the composition is preferably in a range from 0.05 to 1.0 wt%, particularly from 0.1 to 0.8 wt%, and particularly preferably from 0.15 to 0.6 wt%.

Preferably, the composition may further comprise at least one metal catalyst. The metal catalyst may be additionally added or it may be already present in the raw materials of the composition, for example, available from the synthesis of polyurethane polymers having isocyanate groups. Preferred metal catalysts are organotin(IV) compounds, organic titanates or organic zirconates. Particular preferences are organotin(IV) compounds. Suitable organotin(IV) compounds are particularly dialkyltin oxide, dialkyltin dichloride, dialkyltin dicarboxylate and dialkyltin diketonate, preferably dibutyltin oxide, dibutyltin dichloride, dibutyltin diacetate, dibutyltin dilaurate (DBTDL), dibutyltin diacetylacetonate, dioctyltin oxide, dioctyltin dichloride, dioctyltin diacetate, dioctyltin dilaurate or dioctyltin diacetylacetonate.

Based on the whole composition, the amount of the metal catalysts in the composition is preferably in a range from 0.001 to 1.0 wt%, particularly from 0.005% to 0.1 wt%.

Based on the whole composition, the amount of the organotin (IV) compound possibly used in the composition is preferably in a range from 0.001 to 0.2 wt%, particularly from 0.005 to 0.1 wt%.

Based on the whole composition, the amount of a photostabilizer in the composition is preferably in a range from 0.05 to 5.0 wt%, particularly from 0.05 to 1.5 wt%. The composition further comprises a combination of a photocurable material selected from unsaturated acrylic compounds (preferably polyester acrylates) and a hindered amine photostabilizer.

The inventors have found that it is particularly advantageous for improving the weatherability when using one or more photocurable materials selected from the group consisting of unsaturated acrylic compounds along with the hindered amine photostabilizer in the composition according to the invention.

Photocurable material readily suffers from a chemical change in its molecular structure by rays of light within a fairly short period of time, accompanying with a physical change such as curing. Here, particularly suitable unsaturated acrylic compounds include acrylic and/or methacrylic monomers having one or more unsaturated groups, oligomers and mixtures thereof. Particular preferences are given to polyester acrylate compounds, for example, commercially available as Aronix M8060.

Hindered amine photostabilizer includes UV absorbers which absorb photoenergy, e.g., from sun beams and fluorescent lamp, and convert it to harmless heat energy, and quenchers which extinct the active center excited by the photoenergy. Most of such hindered amine photostabilizers are commercially available, and include, for example, ADEKASTAB LA-52, LA-57, LA-62, LA-67, LA-63, LA-68, LA-77, LA-82 and. LA-87 (manufactured by ASAHI DENKA KOGYO K. K.); bis(2,2,6,6-tetramethyl-4-piperidyl) sebacate, bis(1,2,2,6,6-pentamethyl-4-piperidyl) sebacate, 1-methyl-8-(1,2,2,6,6-pentamethyl-4-piperidyl) sebacate, 1-[2-(3,5-di-tert-butyl-4-hydroxyphenyl)-propionyloxy]ethyl]-4-[3-(3,5-di-tert-buty-4-h ydroxyphenyl)propionyloxy]-2,2,6,6-tetramethylpiperidyl succinate, dimethyl-1-(2-hydroxyethyl)-4-hydroxy-2,2,6,6-tetramethylpiperidine polycondensate, poly[[6-1-(1,1,3,3-tetramethylbutyl)imino-1,3,5-triazin-2,4-diyl][(2,2,6,6-tetramethyl-4 -piperdyl)imino]hexamethylene[(2,2,6,6-tetramethyl-4-piperdyl)imino]], bis(1,2,2,6,6-pentamethyl-4-piperidyl)-2-(3,5-di-t-butyl-4-hydroxybenzyl)-2-n-butyl malonate, or a mixture thereof. Preference is given to, e.g., commercially available Tinuvin 292, being a mixture of bis(1,2,2,6,6-pentamethyl-4-piperidyl) sebacate and 1-methyl-8-(1,2,2,6,6-pentamethyl-4-piperidyl) sebacate.

In addition to the above constituents, the composition according to the invention may further comprise other constituents that are common for polyurethane adhesives, for example the following:
- Crosslinkers, for example oligomers or derivatives of diisocyanates, such as MDI, TDI, HDI or IPDI, particularly isocyanurates, carbodiimide, uretonimine, biuret, allophanate, and iminooxadiazinedione, or mixtures of MDI and MDI homologs (polymeric MDI or PMDI);
- Desiccants or dehydrants, for example, p-tolyl isocyanates such as p-tosyl isocyanates and other reactive isocyanates, calcium oxide or molecular weights;
- Rheology modifiers, for example, thickeners such as, those modified polyureas described as thixotropic agents ("thixotropy endowing agents") on pages 9-11 in WO 02/48228A2, polyamide wax, polyethylene wax, fibrous talc, derivatives of castor oil, bentonites, or fumed silicas;
- Stabilities against heat, light and UV radiation;
- flame-retardant substances;
- Surfactants, for example, such as wetting agents, flow enhancers, deaerator agents, or defoamer;
- Biocides, for example, such as algicides or fungicides;
   and other substances that are typically used in one-component compositions containing isocyanates, e.g., fibers such as polyethylene fibers, dyes, pigments or other admixtures known to a person skilled in the art.

In an advantageous embodiment, the composition comprises less than 1 wt%, preferably less than 0.5 wt%, and more preferably less than 0.1 wt% of organic solvents, particularly ketones, aromatic hydrocarbons, dimethylformamide, tetrahydrofuran and the like, based on the total weight of the composition.

The invention further comprises the use of the above composition as a moisture-curable adhesive or sealant. It is particularly suitable to apply the composition according to the invention on concrete, mortar, brick, tile, gypsum, natural stone such as granite or marble, glass, glass ceramic, screen printing ceramic, metals or metal alloys, wood, plastic and painted materials.

The composition according to the invention preferably has a consistency of a paste with structural adhesion performances. The composition may be applied by means of a glue gun or a pump system, or extruded by means of a suitable nozzle.

Hence, another aspect of the invention relates to a method of bonding or sealing substrates, comprising:
a) applying the above-mentioned composition according to the invention to a first substrate;
b) providing a second substrate on which the above-mentioned composition according to the invention is optionally applied; and
c) contacting the first and second substrates;
wherein the first and second substrates are made from the same or different materials. Preferably, the first and second substrates, identically or differently, are selected from glass, ceramic, concrete, mortar, metal profile, wood and plastics. More preferably, the composition is used for bonding or sealing transportation vehicles and parts thereof, preferably automobiles and parts thereof.

After applications, under the action of moisture, optionally with accelerating by heat, the composition according to the invention is rapidly cured, and meanwhile, the polyurethane prepolymers PU and the crosslinkers and/or latent curing agents that are optionally contained will carries out a rapid crosslinking. The moisture required for curing can either originate from air (atmospheric moisture), and thus the composition is cured by the diffusion of the moisture from outside towards inside. However, an aqueous component may be also added to the composition, for example, in the form of an aqueous paste, which is mixed, for example, via a static mixer, with the composition in a uniform or non-uniform form.

The composition according to the invention has a long durability, i.e., a storage stability over a long period. The term "storage stable" or "storable" means that a composition can be stored at room temperature in a suitable container over a long period, typically over at least 3 months to up to 6 months or more, without its application or use properties (particularly viscosities, extruding forces required upon applications from a container and crosslinking rates) being changed to such an extent that the use thereof is influenced as a result of the storage. This means that, in comparison to the extruding force of the freshly prepared composition that has been stored for 7 days at 23 °C, the extruding force of the composition of the invention after storage at 60 °C (this temperature leads to accelerated aging) for 14 days, measured 23 °C according to the below-mentioned method, is increased preferably at most 3 times, for example at most 2.5 times, and particularly at most 2 times.

At last, the invention further relates to a cured composition obtained after curing the above-mentioned composition with water (particularly in the form of atmospheric moisture).

### Examples

Examples are described hereinafter, and the examples explain the invention in more details. Of course, the invention is not limited to these described examples.

### List of Raw materials

| Name or Abbreviation | Description | Sources |
|---|---|---|
| 330N | EO-terminated polyether triol (average molecular weight of about 5000 g/mol) | JIAHUA CHEM. |
| JH-240 | PO-terminated polyether diol (average molecular weight of about 4000 g/mol) | JIAHUA CHEM. |
| GY-4000 | PO-terminated polyether triol (average molecular weight of about 4000 g/mol) | KUKDO CHEM. |
| Desmodur T80 | Toluene diisocyanate | Covestro |
| Desmodur 44C | 4,4-diphenylmethane diisocyanate | Covestro |
| Desmodur I | Isophorone diisocyanate | Covestro |
| Omyacard 5JI | Surface-treated calcium carbonate | OMYA |
| Monarch M570 | Carbon black | CABOT |
| DOA | Diisodecyl phthalate | FORMOSA PLASTICS |
| Silquest^{®}A-187^{™} | glycidoxypropyltrimethoxysilane | MOMENTIVE |
| PTSI | p-tosyl isocyanate | LIANHE TECH |
| Aronix M8060 | Polyester acrylate | DIC Zhangjiagang Chem. |
| Tinuvin 292 | Mixture of bis(1,2,2,6,6-pentamethyl-4-piperidyl) sebacate and 1-methyl-8-(1,2,2,6,6-pentamethyl-4-piperidyl) sebacate | BASF |
| Curing agent LI | Imide compounds | SIKA |
| HAT-Paste | Polyurea thixotropic agent | SIKA |
| DBTDL | Dibutyltin dilaurate | Nanjing Tinchem. |
| Dabco33LV | 33% dipropylene glycol solution of triethylene diamine | Air Products & Chemicals |

### Test methods

Outdoor cracking: a Phenix microscope with 20x amplification was used to observe if there are cracks on the adhesive strip after outdoor solar exposure.

Outdoor black outflow: it was observed with naked eyes if there were black marks outflowing below the adhesive strip after outdoor solar exposure.

TVOC: the measurement performed with the reference to Standard VDA 277 for determination of organic emission of non-metallic materials from vehicles Interior.

Matte performance: several grams of a composition was applied on Bristol paper in a layer thickness of about 2 mm, observing the surface gloss with naked eyes. The number of the symbol "+" was used to represent the degree of the matte effect, while the symbol "-" was used to represent glossy meaning no matte effect.

Blistering performance: two strips of the composition were applied on two transparent glass sheets respectively, one having width 20 mm x height 20 mm, and the other having width 10 mm x height 10 mm, and then they were placed in an oven at 60 °C and an atmospheric oven at 40 °C/80% respectively; after 10 days, the strips were cut with a knife to observe if there were blisters.

Extruding force: the composition was filled in an internally-painted aluminum cartridge (external diameter: 46.9 mm, internal diameter: 46.2 mm, length: 215 mm, Metric ISO Thread: M15 × 1.5 mm) and sealed in air-tightness with a polyethylene plug (diameter 46.1 mm) available from Novelis Deutschland GmbH. After conditioning for 24 h at a temperature of 23 °C, the cartridge was opened and the composition was extruded with an extrusion apparatus. For this, a spray nozzle having an opening with an internal diameter 3 mm was twisted on the thread of the cartridge. The extrusion apparatus (Zwick/Roell Z005) determined the force required for extruding the composition at the extrusion speed of 60 mm/min. The given value is an average value of the forces measured at the extrusion distances 22 mm, 24 mm, 26 mm and 28 mm. At the extrusion distance 30 mm, the measurement was stopped. Mechanical performances e.g. tensile strength: tensile strengths and elongations at break were measured in accordance with DIN EN ISO 527 (stretching speed: 200 mm/min), determined on thin films having a thickness of 2 mm obtained after curing at 23 °C (room temperature "RT") and in a relative atmospheric humidity 50% for 7 days and after curing at 90 °C for 300 h respectively.

### Preparation of polyurethane prepolymer PU-1

Desmodur 44C was placed in an oven at 70 °C for 2 hours. A glass reactor was placed on an electric heating jacket. Under N₂ gas protection, 300 g of 330 N and 88 g of a plasticizer DOA were added and the temperature was raised to 50 °C. According to NCO/OH molar ratio of 2.1 : 1, 50 g of Desmodur 44C were added. After stirring for 5 minutes, 0.04 g of a catalyst Dabco33LV were added and the temperature was continuously raised to 80 °C, at which timing was started. After 1 hour, the NCO content was measured, and the reaction was stopped when the measured value was close to the predetermined value.

### Preparation of polyurethane prepolymer PU-2

A glass reactor was placed on an electric heating jacket. Under N₂ gas protection, 39 g of Desmodur T80, 325 g of JH-240, 130 g of GY-4000 and a plasticizer DOA were added and the temperature was raised to 50 °C. After stirring for 5 minutes, 0.04 g of a catalyst Dabco33LV were added and the temperature was continuously raised to 80 °C, at which timing was started. After 1 hour, the NCO content was measured, and the reaction was stopped when the measured value was close to the predetermined value.

### Preparation of polyurethane prepolymer PU-3

A glass reactor was placed on an electric heating jacket. Under N₂ gas protection, 69 g of Desmodur I, 360 g of JH-240, 135 g of GY-4000 and a plasticizer DOA were added and the temperature was raised to 50 °C. After stirring for 5 minutes, 0.06 g of a catalyst DBTDL were added and the temperature was continuously raised to 80 °C, at which timing was started. After 1 hour, the NCO content was measured, and the reaction was stopped when the measured value was close to the predetermined value.

### Preparation of sealing adhesives

To a planet stirrer, individual polyurethane prepolymers, a water-absorbing stabilizer, a coupling agent, and a photostabilizer were added, and after stirring to be uniformly, fillers and carbon black were added under stirring in vacuum till homogeneously. Dry nitrogen gas was used to eliminate the vacuum state. The mixture was added with a catalyst and evacuated. After it was stirred to be uniform, the mixture was charged and filled in a sealed container ready for use. The constituents of the individual compositions are shown in the following Table 1, wherein "%" refers to weight percentages.

### Tested results of performances

As for the prepared compositions, the individual performances of the compositions were tested according to the above-mentioned test methods. The measured results were listed in the following Table 2.

**Table 1 Constituents of Compositions**

| | Ex 1 | Ex 2 | Ref. 1 | Ref. 2 | Ref. 3 | Ref. 4 | Ref. 5 | Ref. 6 |
|---|---|---|---|---|---|---|---|---|
| Triol: diol | 5.3:1 | 11:1 | Pure triol | 3:1 | 5.5:1 | 5.3:1 | 5.3:1 | 5.3:1 |
| PU-1 | 29.00 | 32.00 | 35.00 | 25.00 | 29.00 | 29.00 | 29.00 | 29.00 |
| PU-2 | 6.00 | 3.00 | | 10.00 | | 6.00 | 6.00 | 6.00 |
| PU-3 | | | | | 6.00 | | | |
| Monarch M570 | 14.00 | 14.00 | 14.00 | 14.00 | 14.00 | 3.00 | 12.00 | 18.00 |
| Omyacard 5JI | 20.00 | 20.00 | 20.00 | 20.00 | 20.00 | 28.20 | 22.00 | 16.00 |
| Curing agent LI | | | | | | 2.80 | | |
| DOA | 17.89 | 17.89 | 17.89 | 17.89 | 17.89 | 17.89 | 17.89 | 17.89 |
| PTSI | 0.70 | 0.70 | 0.70 | 0.70 | 0.70 | 0.70 | 0.70 | 0.70 |
| A 187 | 0.20 | 0.20 | 0.20 | 0.20 | 0.20 | 0.20 | 0.20 | 0.20 |
| Aronix M8060 | 0.80 | 0.80 | 0.80 | 0.80 | 0.80 | 0.80 | 0.80 | 0.80 |
| Tinuvin 292 | 0.40 | 0.40 | 0.40 | 0.40 | 0.40 | 0.40 | 0.40 | 0.40 |
| HATpaste | 11.00 | 11.00 | 11.00 | 11.00 | 11.00 | 11.00 | 11.00 | 11.00 |
| DBTDL | 0.01 | 0.01 | 0.01 | 0.01 | 0.01 | 0.01 | 0.01 | 0.01 |
| Total amount | 100.00 | 100.00 | 100.00 | 100.00 | 100.00 | 100.00 | 100.00 | 100.00 |

**Table 2. Performance tests of individual compositions**

| | Ex 1 | Ex 2 | Ref. 1 | Ref. 2 | Ref. 3 | Ref. 4 | Ref. 5 | Ref. 6 |
|---|---|---|---|---|---|---|---|---|
| Outdoor black outflow after one year | None | None | Yes | None | None | None | None | None |
| Outdoor cracking after one year | None | None | Yes | None | Yes | Yes | None | None |
| TVOC (µgC/g) | 32 | 40 | 38 | 40 | 540 | 103 | 45 | 28 |
| Matte | + | + | + | + | + | - | + | ++ |
| Blistering | None | None | None | None | None | None | Yes | None |
| Extruding force (3mm) | 750 | 730 | 780 | 730 | 700 | 540 | 650 | 850 |
| Tensile strength (MPa) (23 °C, 7d) | 3.46 | 3.6 | 3.83 | 1.66 | 3.51 | 2.45 | 3.15 | 3.56 |
| Elongation at break (%) (23°C, 7d) | 470 | 465 | 410 | 442 | 435 | 500 | 455 | 410 |
| Tensile strength (MPa) (300h, 90°C) | 3.2 | 3.65 | 4 | 1.66 | 2.97 | 2.1 | 2.8 | 3.38 |
| Elongation at break (%) (300h, 90°C) | 430 | 450 | 390 | 262 | 350 | 350 | 400 | 380 |

## Claims

1. Polyurethane composition, based on the total weight of the composition, comprising,
A) from 20 to 50 wt%, preferably from 25 to 40 wt% of at least one isocyanate-terminated polyurethane prepolymer PU which is a reaction product of polyether polyols with at least two different aromatic polyisocyanates or a mixture of the reaction products formed by reacting polyether triol and/or diol with one of two different aromatic polyisocyanates respectively, wherein the polyether polyols comprise polyether diols and polyether triols with a weight ratio of polyether triols to polyether diols in a range of 4:1 to 13:1; and
B) from 12.5 to 17.5 wt%, preferably from 13 to 16.5 wt% of carbon black.

2. The polyurethane composition according to claim 1, **characterized in that** the aromatic polyisocyanates are diisocyanates which are preferably selected from m- and p-xylylene diisocyanate (m- and p-XDI), m- and p-tetramethyl-1,3-xylylene diisocyanate, m- and p-tetramethyl-1,4-xylylene diisocyanate, bis(1-Isocyanato-1-methylethyl)naphthalene, 2,4- and 2,6-tolylene diisocyanate (TDI), 4,4'-, 2,4'- and 2,2'-diphenylmethane diisocyanate (MDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), and oligomers and mixtures thereof;
more preferably from 4,4'-, 2,4'- and 2,2'-diphenylmethane diisocyanate (MDI) and 2,4- and 2,6-tolylene diisocyanate (TDI).

3. The polyurethane composition according to any one of preceding claims, **characterized in that** the polyether diols and polyether triols are selected from polyoxyethylene diols or triols, polyoxypropylene diols or triols and polyoxypropylene-polyoxyethylene diols or triols.

4. The polyurethane composition according to any one of preceding claims, **characterized in that** the polyurethane prepolymer PU is a mixture of the reaction products formed by reacting polyether triol and/or diol with one of two different aromatic polyisocyanates respectively, preferably a mixture of the reaction product of polyether triol with MDI and the reaction product of polyether triol and polyether diol with TDI.

5. The polyurethane composition according to any one of preceding claims, **characterized in that** the content of the residual free NCO group in the polyurethane prepolymer PU is in a range of from 1.0 to 2.5 wt%.

6. The polyurethane composition according to any one of preceding claims, **characterized in that** the composition comprises in total 10 to 70 wt%, preferably 20 to 60 wt%, more preferably 35 to 55 wt% of fillers including the carbon black.

7. The polyurethane composition according to any one of preceding claims, **characterized in that** the composition comprises further the combination of a photo-curable material selected from unsaturated acrylic compound, preferably polyester acrylate, with a hindered amine light stabilizer.

8. The polyurethane composition according to any one of preceding claims, **characterized in that** the molecular weight of the polyether diol ranges from 3000 to 5000 g/mol and the molecular weight of the polyether triol ranges from 4000 to 6000 g/mol.

9. The polyurethane composition according to any one of preceding claims, **characterized in that** the composition comprises at least one further constituent selected from crosslinkers, plasticizers, solvents, catalysts, adhesion promoters, desiccants, other stabilizers, pigments and rheology aids.

10. The polyurethane composition according to any one of preceding claims, **characterized in that** the composition comprises, based on the total weight of the composition, less than 1 wt%, preferably 0 wt% of polyaldimine.

11. Cured composition obtained after curing the composition according to any of claims 1 to 10.

12. Method of bonding or sealing substrates, comprising:
a) Applying the composition according to any of claims 1 to 10 to a first substrate;
b) Providing a second substrate on which the composition according to any of claims 1 to 10 is optionally applied; and
c) Contacting the first and second substrate;
wherein the first and second substrates are made from the same or different materials.

13. The method according to claim 12, **characterized in that** the first and second substrates, identically or differently, are selected from glass, ceramic, concrete, mortar, metal profile, wood and plastics.

14. The method according to claim 12, **characterized in that** the method is used for bonding or sealing transportation vehicles and parts thereof, preferably automobiles and parts thereof.

15. Products obtained by the method according to any of claims 12 to 14.

16. Use of carbon black in an amount of 12.5 to 17.5 wt%, based on the total weight of the composition for reducing blistering during curing and improving the matt effects in the polyurethane composition as described in any one of claims 1 to 10.

## Patentansprüche

1. Polyurethanzusammensetzung, umfassend, bezogen auf das Gesamtgewicht der Zusammensetzung,
A) 20 bis 50 Gew.-%, vorzugsweise 25 bis 40 Gew.-%, mindestens eines isocyanatterminierten Polyurethanprepolymers PU, bei dem es sich um ein Umsetzungsprodukt von Polyetherpolyolen mit mindestens zwei verschiedenen aromatischen Polyisocyanaten oder ein Gemisch der durch Umsetzung von Polyethertriol und/oder -diol mit jeweils einem von zwei verschiedenen aromatischen Polyisocyanaten gebildeten Umsetzungsprodukte handelt, wobei die Polyetherpolyole Polyetherdiole und Polyethertriole mit einem Gewichtsverhältnis von Polyethertriolen zu Polyetherdiolen in einem Bereich von 4:1 bis 13:1 umfassen; und
B) 12,5 bis 17,5 Gew.-%, vorzugsweise 13 bis 16,5 Gew.- %, Ruß.

2. Polyurethanzusammensetzung nach Anspruch 1, **dadurch gekennzeichnet, dass** es sich bei den aromatischen Polyisocyanaten um Diisocyanate handelt, die vorzugsweise aus m- und p-Xylylendiisocyanat (m- und p-XDI), m- und p-Tetramethyl-1,3-xylylendiisocyanat, mund p-Tetramethyl-1,4-xylylendiisocyanat, Bis(1-isocyanato-1-methylethyl)naphthalin, 2,4- und 2,6-Tolylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI) und Oligomeren und Gemischen davon;
weiter bevorzugt aus 4,4'-, 2,4'- und 2,2'-Diphenylmethandiisocyanat (MDI) und 2,4- und 2,6-Tolylendiisocyanat (TDI), ausgewählt sind.

3. Polyurethanzusammensetzung nach einem der vorhergehenden Ansprüche, **dadurch gekennzeichnet, dass** die Polyetherdiole und Polyethertriole aus Polyoxyethylendiolen oder -triolen, Polyoxypropylendiolen oder -triolen und Polyoxypropylenpolyoxyethylendiolen oder -triolen ausgewählt sind.

4. Polyurethanzusammensetzung nach einem der vorhergehenden Ansprüche, **dadurch gekennzeichnet, dass** es sich bei dem Polyurethanprepolymer PU um ein Gemisch der durch Umsetzung von Polyethertriol und/oder -diol mit jeweils einem von zwei verschiedenen aromatischen Polyisocyanaten gebildeten Umsetzungsprodukte, vorzugsweise ein Gemisch des Umsetzungsprodukts von Polyethertriol mit MDI und des Umsetzungsprodukts von Polyethertriol und Polyetherdiol mit TDI, handelt.

5. Polyurethanzusammensetzung nach einem der vorhergehenden Ansprüche, **dadurch gekennzeichnet, dass** der Gehalt an restlichen freien NCO-Gruppen in dem Polyurethanprepolymer PU in einem Bereich von 1,0 bis 2,5 Gew.-% liegt.

6. Polyurethanzusammensetzung nach einem der vorhergehenden Ansprüche, **dadurch gekennzeichnet, dass** die Zusammensetzung insgesamt 10 bis 70 Gew.-%, vorzugsweise 20 bis 60 Gew.-%, besonders bevorzugt 35 bis 55 Gew.-%, Füllstoffe einschließlich des Rußes umfasst.

7. Polyurethanzusammensetzung nach einem der vorhergehenden Ansprüche, **dadurch gekennzeichnet, dass** die Zusammensetzung ferner die Kombination eines photohärtbaren Materials, das aus ungesättigten Acrylverbindungen, vorzugsweise Polyesteracrylaten, ausgewählt ist, mit einem Lichtschutzmittel vom Typ gehindertes Amin umfasst.

8. Polyurethanzusammensetzung nach einem der vorhergehenden Ansprüche, **dadurch gekennzeichnet, dass** das Molekulargewicht des Polyetherdiols im Bereich von 3000 bis 5000 g/mol liegt und das Molekulargewicht des Polyethertriols im Bereich von 4000 bis 6000 g/mol liegt.

9. Polyurethanzusammensetzung nach einem der vorhergehenden Ansprüche, **dadurch gekennzeichnet, dass** die Zusammensetzung mindestens einen weiteren Bestandteil umfasst, der aus Vernetzern, Weichmachern, Lösungsmitteln, Katalysatoren, Haftvermittlern, Trocknungsmitteln, anderen Stabilisatoren, Pigmenten und Rheologiehilfsmitteln ausgewählt ist.

10. Polyurethanzusammensetzung nach einem der vorhergehenden Ansprüche, **dadurch gekennzeichnet, dass** die Zusammensetzung, bezogen auf das Gesamtgewicht der Zusammensetzung, weniger als 1 Gew.-%, vorzugsweise 0 Gew.-%, Polyaldimin umfasst.

11. Gehärtete Zusammensetzung, erhalten nach dem Härten der Zusammensetzung nach einem der Ansprüche 1 bis 10.

12. Verfahren zum Verkleben oder Abdichten von Substraten, umfassend:
a) Aufbringen der Zusammensetzung nach einem der Ansprüche 1 bis 10 auf ein erstes Substrat;
b) Bereitstellen eines zweiten Substrats, auf dem gegebenenfalls die Zusammensetzung nach einem der Ansprüche 1 bis 10 aufgebracht ist; und
c) Inkontaktbringen des ersten und des zweiten Substrats; wobei das erste und das zweite Substrat aus dem gleichen Material oder aus verschiedenen Materialien bestehen.

13. Verfahren nach Anspruch 12, **dadurch gekennzeichnet, dass** das erste und das zweite Substrat gleich oder verschieden aus Glas, Keramik, Beton, Mörtel, Metallprofil, Holz und Kunststoffen ausgewählt sind.

14. Verfahren nach Anspruch 12, **dadurch gekennzeichnet, dass** das Verfahren zum Verkleben oder Abdichten von Transportfahrzeugen und Teilen davon, vorzugsweise Automobilen und Teilen davon, verwendet wird.

15. Produkte, erhalten durch das Verfahren nach einem der Ansprüche 12 bis 14.

16. Verwendung von Ruß in einer Menge von 12,5 bis 17,5 Gew.-%, bezogen auf das Gesamtgewicht der Zusammensetzung, zur Verringerung der Blasenbildung während des Härtens und zur Verbesserung der Matteffekte in der Polyurethanzusammensetzung gemäß einem der Ansprüche 1 bis 10.

## Revendications

1. Composition de polyuréthane, par rapport au poids total de la composition, comprenant,
A) de 20 à 50 % en poids, de préférence de 25 à 40 % en poids d'au moins un prépolymère de polyuréthane à terminaison isocyanate PU qui est un produit de réaction de polyéther polyols avec au moins deux polyisocyanates aromatiques différents ou un mélange des produits de réaction formés par mise en réaction de polyéther triol et/ou diol avec l'un parmi deux polyisocyanates aromatiques différents, respectivement, dans laquelle les polyéther polyols comprennent des polyéther diols et des polyéther triols avec un rapport pondéral des polyéther triols sur les polyéther diols dans une plage de 4:1 à 13:1 ; et
B) de 12,5 à 17,5 % en poids, de préférence de 13 à 16,5 % en poids de noir de carbone.

2. Composition de polyuréthane selon la revendication 1, **caractérisée en ce que** les polyisocyanates aromatiques sont des diisocyanates qui sont de préférence choisis parmi un diisocyanate de m- et p-xylylène (m- et p-XDI), un diisocyanate de m- et p-tétraméthyl-1,3-xylylène, un diisocyanate de m- et p-tétraméthyl-1,4-xylylène, le bis(1-isocyanato-1-méthyléthyl)naphtalène, un 2,4- et 2,6-diisocyanate de tolylène (TDI), un 4,4'-, 2,4'- et 2,2'-diisocyanate de diphénylméthane (MDI), un 1,3- et 1,4-diisocyanate de phénylène, le 2,3,5,6-tétraméthyl-1,4-diisocyanatobenzène, 1,5-diisocyanate de naphtalène (NDI), le 3,3'-diméthyl-4,4'-diisocyanatodiphényle (TODI), et des oligomères et des mélanges de ceux-ci ; plus préférablement parmi un 4,4'-, 2,4'- et 2,2'-diisocyanate de diphénylméthane (MDI) et un 2,4- et 2,6-diisocyanate de tolylène (TDI).

3. Composition de polyuréthane selon l'une quelconque des revendications précédentes, **caractérisée en ce que** les polyéther diols et les polyéther triols sont choisis parmi des polyoxyéthylène diols ou triols, des polyoxypropylène diols ou triols et des polyoxypropylène-polyoxyéthylène diols ou triols.

4. Composition de polyuréthane selon l'une quelconque des revendications précédentes, **caractérisée en ce que** le prépolymère de polyuréthane PU est un mélange des produits de réaction formés par mise en réaction d'un polyéther triol et/ou un diol avec l'un parmi deux polyisocyanates aromatiques différents, respectivement, de préférence un mélange du produit de réaction d'un polyéther triol avec le MDI et du produit de réaction d'un polyéther triol et d'un polyéther diol avec le TDI.

5. Composition de polyuréthane selon l'une quelconque des revendications précédentes, **caractérisée en ce que** la teneur du groupe NCO libre résiduel dans le prépolymère de polyuréthane PU est dans une plage de 1,0 à 2,5 % en poids.

6. Composition de polyuréthane selon l'une quelconque des revendications précédentes, **caractérisée en ce que** la composition comprend au total 10 à 70 % en poids, de préférence 20 à 60 % en poids, plus préférablement 35 à 55 % en poids de charges comprenant le noir de carbone.

7. Composition de polyuréthane selon l'une quelconque des revendications précédentes, **caractérisée en ce que** la composition comprend en outre la combinaison d'un matériau photodurcissable choisi parmi un composé acrylique insaturé, de préférence un acrylate de polyester, avec un stabilisant à la lumière de type amine encombrée.

8. Composition de polyuréthane selon l'une quelconque des revendications précédentes, **caractérisée en ce que** le poids moléculaire du polyéther diol est dans la plage de 3 000 à 5 000 g/mole et le poids moléculaire du polyéther triol est dans la plage de 4 000 à 6 000 g/mole.

9. Composition de polyuréthane selon l'une quelconque des revendications précédentes, **caractérisée en ce que** la composition comprend au moins un autre constituant choisi parmi les agents de réticulation, les plastifiants, les solvants, les catalyseurs, les promoteurs d'adhérence, les siccatifs, d'autres stabilisants, des pigments et des auxiliaires de rhéologie.

10. Composition de polyuréthane selon l'une quelconque des revendications précédentes, **caractérisée en ce que** la composition comprend, sur la base du poids total de la composition, moins de 1 % en poids, de préférence 0 % en poids de polyaldimine.

11. Composition durcie obtenue après durcissement de la composition selon l'une quelconque des revendications 1 à 10.

12. Procédé de liaison ou de scellement de substrats, comprenant :
a) l'application de la composition selon l'une quelconque des revendications 1 à 10 sur un premier substrat ;
b) la fourniture d'un deuxième substrat sur lequel la composition selon l'une quelconque des revendications 1 à 10 est éventuellement appliquée ; et
c) la mise en contact du premier et du deuxième substrat ;
les premier et deuxième substrats étant préparés à partir de matériaux identiques ou différents.

13. Procédé selon la revendication 12, **caractérisé en ce que** les premier et deuxième substrats, de manière identique ou de manière différente, sont choisis parmi le verre, la céramique, le béton, le mortier, le profilé métallique, le bois et les matières plastiques.

14. Procédé selon la revendication 12, **caractérisé en ce que** le procédé est utilisé pour lier ou sceller des véhicules de transport et des parties de ceux-ci, de préférence des automobiles et des parties de celles-ci.

15. Produits obtenus par le procédé selon l'une quelconque des revendications 12 à 14.

16. Utilisation de noir de carbone en une quantité de 12,5 à 17,5 % en poids, par rapport au poids total de la composition, pour réduire le cloquage pendant le durcissement et améliorer les effets mats dans la composition de polyuréthane telle que décrite dans l'une quelconque des revendications 1 à 10.
